# EUROPEAN PATENT SPECIFICATION

(11) **EP 0 849 021 B1**
(45) Date of publication and mention of the grant of the patent: **03.09.2003**
(21) Application number: 97203561.2
(22) Date of filing: 14.11.1997
(51) Int. Cl.: B23C 5/10, B23C 3/12, B23C 5/12

(54) **Edge milling cutter with cutter inserts**
Eckenfräser mit Schneideinsätzen
Fraise de coin avec plaquettes de coupe

(30) Priority: 21.12.1996 US 773730
(43) Date of publication of application: 24.06.1998
(73) Proprietor: THE BOEING COMPANY, Seattle, Washington 98124-2207 (US)
(72) Inventor: Wright, Galen R., Auburn, Washington 98092 (US)
(74) Representative: Bartelds, Erik

(56) References cited:
- EP-A- 0 431 746
- EP-A- 0 620 070
- US-A- 4 243 348

## Description

### FIELD OF THE INVENTION

The present invention relates to a high speed milling tool for deburring and edge radiusing of machine parts. More specifically, the invention relates to a milling tool as defined in the pre-characterizing portion of claim 1. Such a tool is known from EP-A-0 431 746.

### BACKGROUND INFORMATION

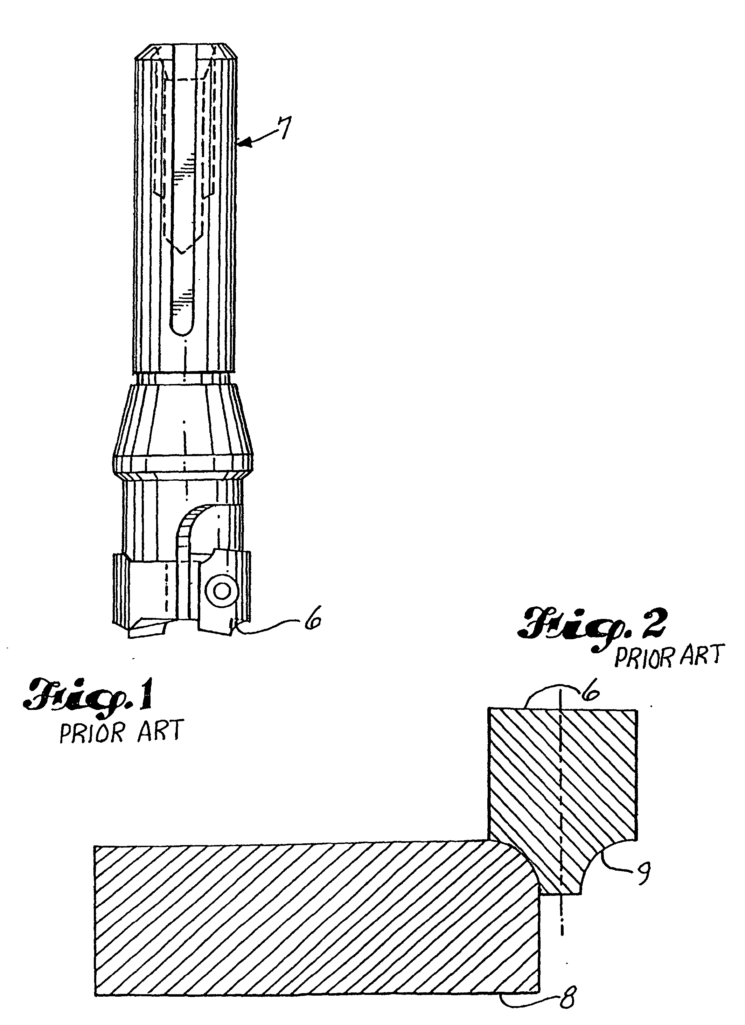

Present cutters available are standard concave radius tools. These cutters use multiple concave shaped cutting surfaces. One prior art embodiment uses multiple inserts having a concave shaped cutting area as shown in figure 1. The inserts can be either integral or detachable 6 to the tool and each inserts cuts the same surface area on the machine part. These tools work well in low rotation per minute (rpm) and low feedrate applications. The feedrate is the relative movement of the tool in the direction of the part axis (inches/minute).

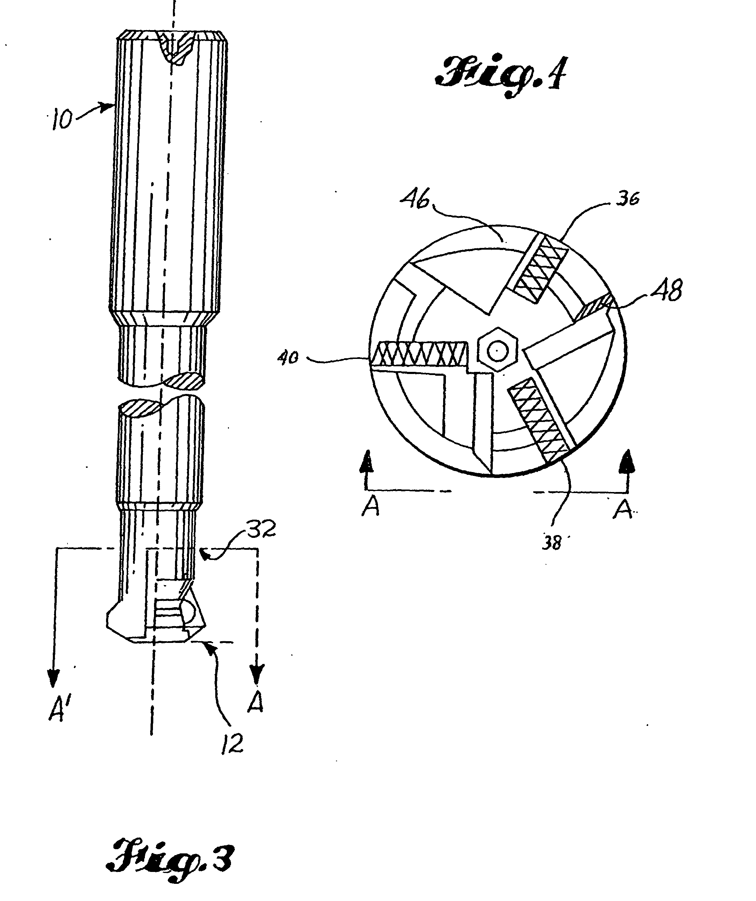

Figure 2 shows a schematic of a prior insert 6 with a concave shaped cutting area overlapping the top edge of a machine part 8 having top and bottom edges. Standard concave radius cutters have a large contact area 9 with the part resulting in a sudden and dramatic increase in cutting forces at high rpm's and feedrates causing the part and cutter to deflect from each other. Their use in high speed milling applications causes deflection and springback between the part and the tool resulting in excessive chatter and unacceptable part surface finish. As the edge of the part becomes thinner or the flange gets longer the amount of chatter or deflection between the part and tool may increase. The feedrate is dependent upon the rigitdity of the tool which in turn depends upon its length to diameter ratio. For instance, a tool having a 7:1 length to diameter ration would require a feedrate of less than about 203,2 mm (8 inches) per minute on aluminum or in applications where the surface quality is not important. Another limitation of this tool is an application requiring long reach or set length to the cutting surface. Here, the tool becomes less rigid providing less support in high rpm applications.

The above-identified prior art document EP-A-0 431 746 already discloses a milling cutter having replaceable cutting inserts mounted on a toothed disc or drum body. Seatings for the inserts on the teeth locate them at spaced intervals on the periphery of each tooth. The inserts of at least one tooth of the body are peripherally staggered in their seatings relative to the inserts on at least one other tooth such that the staggered and spaced inserts on the teeth have paths of rotation that intersect to define a continuous profiled cutting line. The inserts, which may be triangular or square, have their cutting edges ground in situ on the teeth to define the profile of the cutting line. By this method a finish quality profiled surface can be produced using cutting inserts that are initially of standard form. Although this prior art document suggests that the inserts may be rotated, they will not fit properly in their corresponding recess after rotation, due to the fact that the cutting edge will have been ground to shape.

In EP-A-0 620 070 a milling cutter is disclosed including rectangular cutting inserts which are spaced both in circumferencial and in axial direction in order to cut to an approximation of a required cutting profile. This requires a full revolution of the cutter to make a complete cut approximating the required profile. The cutting inserts of this prior art milling tool do not have an equilateral shape, and the prior art document does not include any indication that the recessed edges might be used as cutting edges.

In the milling cutters disclosed in the above two prior art documents AP-A-0 431 746 and EP-A-0 620 070, only a single edge of each insert is used as cutting edge, and consequently, these milling cutters may only radius one edge of a machine part at a time. When a machine part has two adjacent edges which must be edge radiused or deburred, this requires two separate operations with the prior art milling cutters.

Machine parts can also be deburred and edge radiused using electric or air powered hand tools. These tools include rotary files and rotary sanders sometimes operating at faster feedrates than using standard concave radius cutters. Rotating files are used to round or radius a parts edge. Rotating sanders use either cylinders or disks to smooth part surfaces. Rotary buffers are used to produce a smooth finish. All hand tools have the disadvantage of potentially undercutting or unintentionally removing part material. Hand tools can also have the disadvantage of limited access to part features that require long reach including edges and ledges.

Previously, it was more cost effective to debur or radius edges by hand due to excessive machine costs. More recently, the availability of high speed machining allowing speeds of at least 10 000 rpm has become economically competitive with hand tools.

### SUMMARY OF THE INVENTION

The invention now has for its object to provide an improved milling tool, with which two adjacent edges of a machine part may be efficiently deburred or edge radiused in a single operation. In accordance with the invention, this is achieved by a milling tool having the features of claim 1.

Preferred embodiments of the milling tool of the invention form the subject-matter of the dependent claims.

These and other advantages and features will become apparent from the detailed description of the best modes for carrying out the invention that follows.

### BRIEF DESCRIPTION OF THE DRAWINGS

FIGURE 1 is a side view of a prior art standard concave radius tool.
FIGURE 2 shows a schematic of a prior art cutting insert and machine part.
FIGURE 3 is a side view of the milling tool according to an embodiment of the invention.
FIGURE 4 is a top view of the milling head.
FIGURE 5 shows a schematic of the cutting inserts according to an embodiment of the invention and the machine part.
FIGURE 6 shows rotated views of the combined top and bottom edge milling tool showing the square inserts.

### DETAILED DESCRIPTION OF THE INVENTION

The previously noted limitations associated with standard concave radius cutters is solved in this invention by the "facet affect" of generating only a portion of the edge radius with each cutting surface. A cutter is developed for high speed machining which approximates a concave cutting radius for milling the top edge and the bottom edge of a part. This is accomplished by using standard carbide indexable inserts, each rotated to a different elevation angle to produce a faceted approximation of a radius. Tungstencarbide based inserts retain their hardness at higher temperatures. The cutter uses square shaped inserts and can mill both the tops and bottoms of edges. The cutters is used in high speed machining to debur or edge radius the machine part from above. The advantages for using inserts include the elimination of the need for replacement of the entire tool body and the capability for milling parts at carbide speeds which can exceed 10 000 ipm. Using inserts that are both indexable and replaceable results in a milling tool having a longer life span than the concave radius tool.

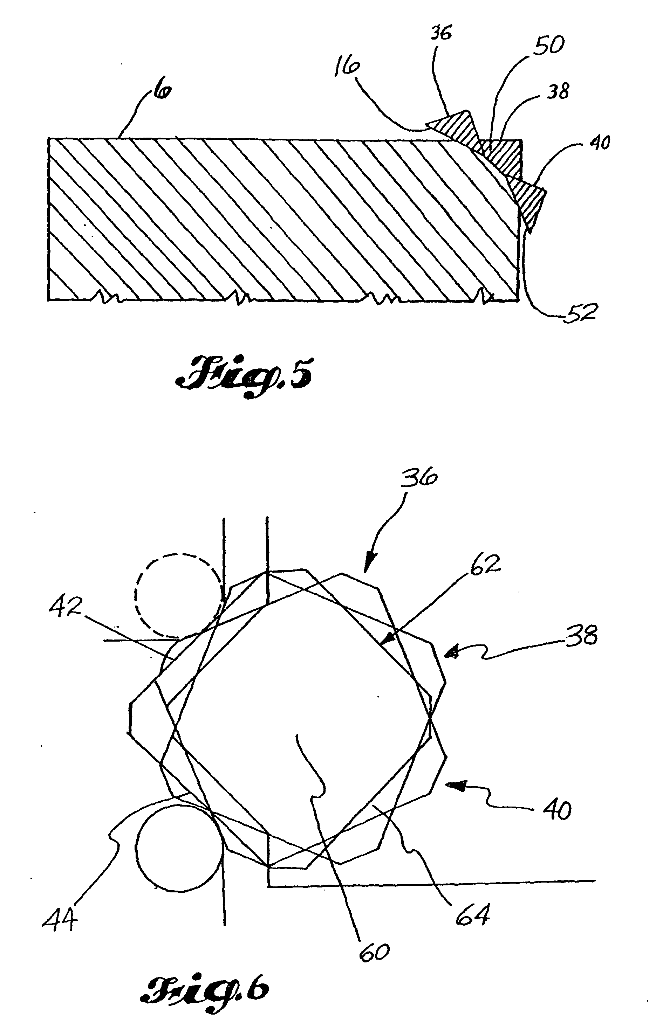

The basic structure of the milling tool is shown in FIGURE **3** and consists of a cutter body **10** with a cutting head **12** at the forward end. The radius of the cutter body may be tapered **32.** The cutter body is of generally circular cross section having an axis of rotation therethrough and can be fabricated using a heat treated steel shaft. This tool steel can maintain cutting hardness at elevated temperatures and generally includes two alloying elements, tungsten or molybdenum or a combination of both. FIGURE **4** shows an end view of the tool including the inserts( 36, 38 , 40 )Figure **5** shows the inserts( 36, 38,40) overlapping the cutting area of the edge of a machine part **8.** A typical cutter tool is 25,4 mm (one inch) or less in diameter and having three inserts (36,38,40).

The features of both the top edge and bottom edge milling heads can be combined into a single cutter. This tool is shown in FIGURE 6 and uses square inserts set at various angles to achieve a faceted approximation of to the cut radius. Each insert **36, 38, 40** is shaped like a square having two faces with each face having four edges **42, 44, 62, 64** for a total of eight edges. The inserts are positioned circumferentially around the end of the cutter body. Each insert is recessed into the body with two outward edges **42, 44.** A corner of the square insert is at an acute angle with the cutter body and provides upward sloping and downward sloping cutting edges. Each insert has two sets of upward sloping and downward sloping edges. The inserts are located 120 degrees apart about the axis of the cutter body.

The cutter inserts are detachably mounted to the cutting head. A mounting screw is threadedly engaged with the insert and the cutting head **60.** The inserts can be rotated so that any of the edges are available as cutting surfaces. The inserts can be oriented at a variety of rake angles. The rake angle is the angle formed by the face of the insert and the normal of the axis of rotation of the tool. The rake angle can be positive for increasing the shearing action resulting in slicing the part material instead of plowing the material for zero rake, or at a negative rake angle for planing the part material. For a zero rake the material is plowed from the part and may result in rough surface. Shearing or planing the part can result in most of the heat being transferred to the material removed from the part. A larger rake angle also provides increased mechanical support for the inserts improving insert support and tool rigidity. This is particularly important for tools having a small radius. A typical rake angle is +10 degrees but can be optimized for a particular application.

After a complete revolution of the cutting tool, a faceteted approximation to the required cut radius is produced at a point along the edge of the machine part. The cutting tool is then advanced along the edge of the machine part whereby the cutting action is repeated or until the edge radiusing is complete.

This cutting concept enhances high speed machining technology requirements. These edge cutters are capable of being run at 10,000 rpm or greater and feedrates of 1,524m (60 inches) per minute or greater. Radius approximating cutters can be fabricated having a wide range of diameters with three or more inserts of various shapes and sizes set at various angles to approximate any edge radius desired.

## Claims

1. A milling tool for edge radiusing of machine parts (8), comprising:
(a) a cutter body of generally circular cross section having an axis of rotation therethrough;
(b) a plurality of carbide cutting inserts (36,38,40);
each said cutting insert (36,38,40) having first and second faces, each face having a plurality of periphical edges (42,44,62,64);
said cutting inserts (36,38,40) being positioned circumferentially and releasably mounted and partially recessed into a first end of said body;
each said cutting insert (36,38,40) having a square shape with four edges (42,44,62,64) and being recessed into the body with at least one outward cutting edge (42,44), each said cutting element (36,38,40) being rotatable so that any of the edges (42,44,62,64) is available as cutting edge; and
each said cutting insert (36,38,40) milling only a portion of the part radius and being rotated to a different elevation angle;
**characterized in that** each said cutting insert (36,38,40) has two outward cutting edges (42,44) and is oriented with an upper edge (42) away from the tool and a lower edge (44) away from the tool, so that said cutting inserts (36,38,40) serve as both a top edge and bottom edge cutter, respectively, said cutting inserts (36,38,40) producing a faceted approximation to the required cut radius.

2. The milling tool for edge radiusing of machine parts (8) as recited in claim 1, **characterized in that** the faces of said cutting inserts (36,38,40) are oriented along the normal to the axis of rotation of said body.

3. The milling tool for edge radiusing of machine parts (8) as recited in claim 1 or 2,
**characterized in that** the faces of said cutting inserts (36,38,40) are oriented at an angle with the normal to the axis of rotation of said body thereby providing a rake angle to the cutting surface.

4. The milling tool for edge radiusing of machine parts (8) as recited in any of claims 1-3, **characterized in that** at least three cutting inserts (36,38,40) are arranged in said body.

5. The milling tool for edge radiusing of machine parts (8) as recited in any of claims 1-4, **characterized in that** the tool is arranged to be run at a speed of at least 10000 rpm.

6. The milling tool for edge radiusing of machine parts (8) as recited in any of claims 1-5, **characterized in that** the tool is arranged to be run at a feedrate of at least 1,5 metres (60 inches) per minute.

## Patentansprüche

1. Fräswerkzeug zum Kantenrunden von Maschinenteilen (8), umfassend:
(a) einen Schneidwerkzeugkörper mit im Allgemeinen kreisförmigem Querschnitt mit einer Rotationsachse dadurch;
(b) eine Mehrzahl von Hartmetall-Schneideinsätzen (36, 38, 40);
wobei jeder Schneideinsatz (36, 38, 40) erste und zweite Flächen besitzt, wobei jede Fläche eine Mehrzahl von Randkanten (42, 44, 62, 64) besitzt;
wobei die Schneideinsätze (36, 38, 40) in Umfangsrichtung positioniert und lösbar angebracht und teilweise in ein erstes Ende des Körpers eingebettet sind;
wobei jeder Schneideinsatz (36, 38, 40) eine quadratische Form mit vier Kanten (42, 44, 62, 64) besitzt und mit zumindest einer äußeren Schneidkante (42, 44) in dem Körper eingebettet ist, wobei jedes Schneidelement (36, 38, 40) derart drehbar ist, dass jede Kante (42, 44, 62, 64) als Schneidkante verfügbar ist; und
wobei jeder Schneideinsatz (36, 38, 40) nur einen Abschnitt des Radius des Teiles fräst und mit einem unterschiedlichen Erhebungswinkel rotiert;
**dadurch gekennzeichnet, dass** jeder Schneideinsatz (36, 38, 40) zwei äußere Schneidkanten (42, 44) besitzt und mit einer oberen Kante (42) entfernt von dem Werkzeug und mit einer unteren Kanten (44) entfernt von dem Werkzeug derart ausgerichtet ist, dass die Schneideinsätze (36, 38, 40) als Schneidwerkzeug sowohl für eine oben liegende Kante als auch für eine unten liegende Kante dienen, wobei die Schneideinsätze (36, 38, 40) eine facettierte Annäherung an den geforderten Schnittradius erzeugen.

2. Fräswerkzeug zum Kantenrunden von Maschinenteilen (8) nach Anspruch 1, **dadurch gekennzeichnet, dass** die Flächen der Schneideinsätze (36, 38, 40) entlang der Senkrechten der Rotationsachse des Körpers ausgerichtet sind.

3. Fräswerkzeug zum Kantenrunden von Maschinenteilen (8) nach Anspruch 1 oder 2, **dadurch gekennzeichnet, dass** die Flächen der Schneideinsätze (36, 38, 40) mit einem Winkel zu der Senkrechten der Rotationsachse des Körpers ausgerichtet sind, wodurch für ein Spanwinkel der Scheidoberfläche gesorgt wird.

4. Fräswerkzeug zum Kantenrunden von Maschinenteilen (8) nach einem der Ansprüche 1 - 3, **dadurch gekennzeichnet, dass** zumindest drei Schneideinsätze (36, 38, 40) in dem Körper angeordnet sind.

5. Fräswerkzeug zum Kantenrunden von Maschinenteilen (8) nach einem der Ansprüche 1 - 4, **dadurch gekennzeichnet, dass** das Werkzeug derart angeordnet ist, dass es mit einer Geschwindigkeit von zumindest 10.000 Umdrehungen pro Minute (rpm) läuft.

6. Fräswerkzeug zum Kantenrunden von Maschinenteilen (8) nach einem der Ansprüche 1 - 5, **dadurch gekennzeichnet, dass** das Werkzeug derart angeordnet ist, dass es mit einem Vorschub von zumindest 1,5 Meter (60 Inch) pro Minute läuft.

## Revendications

1. Outil de fraisage pour réaliser des arrondis sur les arêtes de pièces de machine (8), comprenant :
(a) un corps de coupe de section transversale généralement circulaire ayant un axe de rotation qui le traverse ;
(b) une pluralité d'inserts de coupe en carbure (36, 38, 40) ;
chacun desdits inserts de coupe (36, 38, 40) ayant une première et une seconde face, chaque face ayant une pluralité d'arêtes périphériques (42, 44, 62, 64) ;
lesdits inserts de coupe (36, 38, 40) étant positionnés circonférentiellement et montés de façon libérable, et partiellement en renfoncement dans une première extrémité dudit corps ;
chacun desdits inserts de coupe (36, 38,40) ayant une forme carrée avec quatre arêtes (42, 44, 62, 64) et étant en renfoncement dans le corps avec au moins une arête de coupe extérieure (42, 44) chacun desdits inserts de coupe (36,38, 40) étant en rotation de sorte que l'une quelconque des arêtes (42, 44, 62, 64) est disponible à titre d'arête de coupe ; et
chacun desdits inserts de coupe (36, 38, 40) fraisant uniquement une portion de l'arrondi partiel et étant mis en rotation à un angle d'élévation différent ;
**caractérisé en ce que** chacun desdits inserts de coupe (36, 38, 40) comprend deux arêtes de coupes extérieures (42, 44) et est orienté avec une arête supérieure en éloignement de l'outil et une arête inférieure (44) en éloignement de l'outil, de sorte que lesdits inserts de coupe (36, 38, 40) servent tout deux d'organe de coupe d'arête supérieure et d'organe de coupe d'arête inférieure, respectivement, lesdits inserts de coupe (36, 38, 40) produisant une approximation en facettes de l'arrondi taillé requis.

2. Outil de fraisage pour réaliser des arrondis sur les arêtes de pièces de machine (8), selon la revendication 1, **caractérisé en ce que** les faces desdits inserts de coupe (36, 38, 40) sont orientées le long de la normale à l'axe de rotation dudit corps.

3. Outil de fraisage pour réaliser des arrondis sur les arêtes de pièces de machine (8) selon l'une ou l'autre des revendications 1 et 2, **caractérisé en ce que** les faces desdits inserts de coupe (36, 38, 40) sont orientées sous un angle avec la normale à l'axe de rotation dudit corps, en formant ainsi un angle de dépouille vis-à-vis de la surface de coupe.

4. Outil de fraisage pour réaliser des arrondis sur les arêtes de pièces de machine (8), selon l'une quelconque des revendications 1 à 3, **caractérisé en ce qu'**au moins trois inserts de coupe (36, 38, 40) sont agencés dans ledit corps.

5. Outil de fraisage pour réaliser des arrondis sur les arêtes de pièces de machine, (8), selon l'une quelconque des revendications 1 à 4, **caractérisé en ce que** l'outil est agencé de manière à fonctionner à une vitesse d'au moins 10 000 tours par minute.

6. Outil de fraisage pour réaliser des arrondis sur les arêtes de pièces de machine (8), selon l'une quelconque des revendications 1 à 5, **caractérisé en ce que** l'outil est agencé de manière à fonctionner à une vitesse d'avance d'au moins 1,5 m (60 pouces) par minute.
